# EUROPEAN PATENT SPECIFICATION

(11) **EP 1 603 354 B1**
(45) Date of publication and mention of the grant of the patent: **01.04.2009**
(21) Application number: 05090152.9
(22) Date of filing: 25.05.2005
(51) Int. Cl.: H04W 24/00

(54) **Identification of cause of overload state of base station radio unit**
Identifikation der Überlastursache einer Basisstations-Funkeinheit
Identification de la raison pour une surcharge d'une unité radio d'une station de base

(30) Priority: 02.06.2004 JP 2004164558
(43) Date of publication of application: 07.12.2005
(73) Proprietor: NEC CORPORATION, Minato-ku, Tokyo 108-8001 (JP); NTT DoCoMo, Inc., Tokyo (JP)
(72) Inventor: Matsuki, Toru c/o NEC Corporation, Tokyo 108-8001 (JP)
(74) Representative: Wenzel & Kalkoff

(56) References cited:
- ZHANG Y ET AL: "An efficient load-balancing algorithm based on a two-threshold cell selection scheme in mobile cellular networks" COMPUTER COMMUNICATIONS, ELSEVIER SCIENCE PUBLISHERS BV, AMSTERDAM, NL, vol. 23, no. 5-6, March 2000 (2000-03), pages 452-461, XP004203002 ISSN: 0140-3664
- LESLIE LAMPORT: "Time, clocks, and the ordering of events in a distributed system" COMMUNICATIONS OF THE ASSOCIATION FOR COMPUTING MACHINERY, ACM, NEW YORK, NY, US, vol. 21, no. 7, 1978, pages 558-565, XP002435094 ISSN: 0001-0782
- NOBLET C ET AL: "Quality of service and overload concepts in wireless multimedia networks based on cellular ATM" COMMUNICATIONS, 1997. ICC '97 MONTREAL, TOWARDS THE KNOWLEDGE MILLENNIUM. 1997 IEEE INTERNATIONAL CONFERENCE ON MONTREAL, QUE., CANADA 8-12 JUNE 1997, NEW YORK, NY, USA,IEEE, US, vol. 3, 8 June 1997 (1997-06-08), pages 1458-1462, XP010226995 ISBN: 0-7803-3925-8

## Description

### Background of the Invention

### 1. Field of the Invention

The present invention relates to a mobile telecommunication system and particularly to a method of monitoring an overload state of a base station radio unit in a mobile telecommunication system.

### 2. Description of the Related Art

The capability of processing calls (processable number of calls) of a base station radio unit is determined on the basis of the hardware and software architectures of the relevant base station radio unit. In this type of base station radio unit, when a call is generated in excess of the call processing capability of the relevant base station radio unit causing an overload state, the call will be discarded.

A variety of technologies have recently been disclosed to reduce call loss resulting from the discard of a call made by a base station radio unit.

As an example, a technology is described in JP 2001-128227 in which, when a base station radio unit is placed in a state of operational halt on account of being out-of-order etc., another base station radio unit in the neighborhood of the relevant base station radio unit will handle the service area of the relevant base station radio unit currently in a state of operational halt.

Apart from that, a decision is made in a base station radio unit whether or not additional installation of hardware and/or revision of software to process discarded calls is required, when a call is generated in excess of the call processing capability causing an overload state in the relevant base station radio unit.

A base station radio unit, however, is required to cover a larger service area than its routine service area in situations when there is a need to handle the service area of the neighboring base station radio unit that is in a state of operational halt according to the technology described in the foregoing patent document. As a result, it follows that the number of mobile stations to be accommodated by the base station radio unit increases resulting in boosting the probability that calls will be generated in excess of the call processing capability of the base station radio unit.

Under this circumstance, when the base station radio unit is actually brought into the overload state, it is impossible, solely on the basis of employing the information about the discarded calls, to decide whether the cause of the overload state can be attributed to the operational halt of the neighboring base station radio unit, or to the hardware and software architectures of the overloaded base station radio unit.

For this reason, in the past, when a base station radio unit is brought into an overload state, there has been a possibility of making a mistaken decision that additional installation of hardware and revision of software are necessary in the overloaded base station radio unit, even if the cause of the overload is due to the state of the neighboring base station radio unit.

ZHANG Y ET AL: "An efficient load-balancing algorithm based on a two-threshold cell election scheme in mobile cellular networks"; COMPUTER COMMUNICATIONS, ELSEVIER SCIENCE PUBLISHERS BV, AMSTERDAM, NL; vol. 23, no. 5-6; March 2000 (2000-03); pages 452-461; XP004203002; ISSN: 0140-3664; discloses a load balancing scheme for the base stations of a cellular system. The base stations are linked to a "controller" such as a mobile switching centre (MSC) through dedicated wireline links. Each base station sends state information (i.e. the number of available channels in the cell) independently and concurrently to the MSC. The MSC keeps the state information of all the cells in the system and makes channel assignment decisions based on this state information.

NOBLE C ET AL: "Quality of service and overload concepts in wireless multimedia networks based on cellular ATM"; ICC '97 MONTREAL, 1997 IEEE INTERNATIONAL CONFERENCE ON COMMUNICATIONS, MONTREAL, QUEBEC, CANADA, 8-12 JUNE 1997 (1997-06); vol. 3, pages 1458-1462; XP010226995; ISBN: 0-7803-3925-8; discloses the principle of using the number of excess calls at a base station as a quality-of-service and overload measure in wireless networks.

### Summary of the Invention

It is an object of the present invention to provide a mobile telecommunication system capable of deciding more accurately whether or not the additional installation of hardware and revision of software are necessary for a base station radio unit when the base station radio unit becomes overloaded, and it is another object of the present invention to provide a method of monitoring the state of an overload of a base station radio unit in a mobile telecommunication system.

In the present invention, the radio base station controller makes a decision that a call is generated in any of the plurality of base station radio units in excess of the call processing capability of the relevant base station radio unit causing an overload state, on the basis of the excess-call-number generation information with timestamps provided from each of the plurality of base station radio units. In this regard, the radio base station controller does not directly decide that the cause of the overload of the base station radio unit resides in the existing hardware and software architectures of the base station radio unit, but always checks the states of the base station radio units in the neighborhood of the overloaded base station radio unit.

If the check results show that the states of all the base station radio units in the neighborhood of the overloaded base station radio unit are normal, the radio base station controller decides that the cause of the overload of the base station radio unit is due to the existing hardware and software architectures of the relevant base station radio unit. Conversely, if any of the base station radio units in the neighborhood of the overloaded base station radio unit is in an abnormal state, the radio base station controller decides that the cause of the overload of the base station radio unit is due to the state of the neighboring base station radio unit.

Thus, it can be accurately decided without error that a base station radio unit has become overloaded, and it can also be more accurately decided whether additional installation of hardware and/or revision of software are needed for the overloaded base station radio unit.

The above and other objects, features, and advantages of the present invention will become apparent from the following description with reference to the accompanying drawings, which illustrate examples of the present invention.

### Brief Description of the Drawings

Fig. 1 is a diagram illustrating the construction of the mobile telecommunication system of an embodiment according to the present invention;
Fig. 2 is a schematic diagram representing the positional relationship of base station radio units 2A to 2B shown in Fig. 1; and
Fig. 3 is a schematic diagram in the case that base station radio unit 2G is out of order.

### Description of the Preferred Embodiment

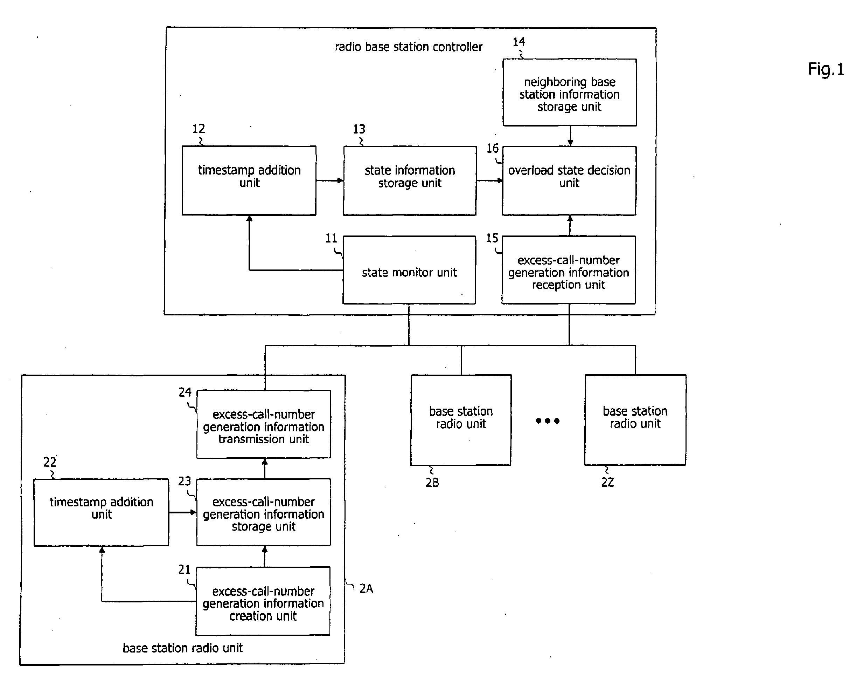

Referring to Fig. 1, the mobile telecommunication system of the embodiment according to the present invention is provided with radio base station controller 1 and a plurality of base station radio units 2A to 2Z assigned to and connected to radio base station controller 1. In this regard, it is presumed that, when a call is generated in the service area of any of the base station radio units 2A to 2Z in excess of the call processing capability (processable number of call) of the relevant base station radio unit, the base station radio unit will not process the call.

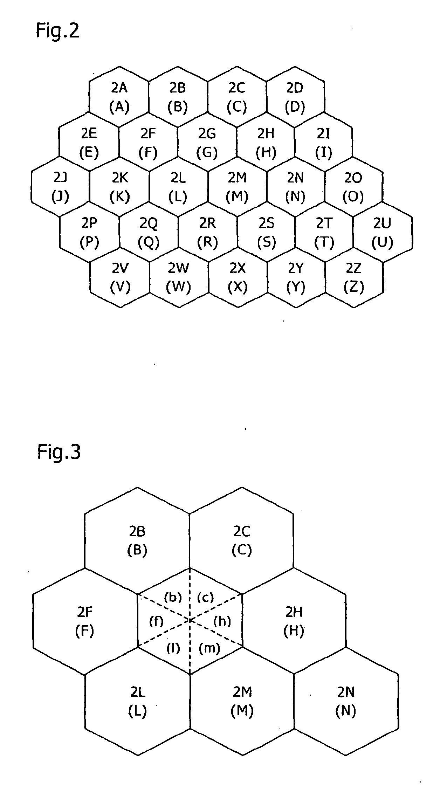

The positional interrelationships of base station radio units 2A to 2Z shown in Fig. 1 is described below with reference to Fig. 2.

Referring to Fig. 2, six base station radio units 2G, 2H, 2L, 2N, 2R and 2S are located in the neighborhood of base station radio unit 2M, for example. For reference, areas A to Z in Fig. 2 represent the areas covered by base station radio units 2A to 2Z, respectively, in the normal state.

The call processing capability of each of base station radio units 2A to 2Z is uniquely determined based on the hardware and software architectures of the base station radio unit. Each of base station radio units 2A to 2Z is adapted to change the processing capability of calls by the installation of additional hardware and revision of software.

Base station radio unit 2A is provided with excess-call-number generation information creation unit 21, timestamp addition unit 22, excess-call-number generation information storage unit 23 and excess-call-number generation information transmission unit 24. For reference, although omitted from Fig. 1, base station radio units 2B to 2Z also have the above constituent elements respectively just like base station radio unit 2A.

When calls are generated in excess of the call processing capability of base station radio unit 2A, excess-call-number generation information creation unit 21 that belongs to base station radio unit 2A counts the number of the calls that have not been processed (excluded from processing) on account of exceeding the call processing capability and creates excess-call-number generation information representing the counted value.

Timestamp addition unit 22 adds timestamps to the excess-call-number generation information created in excess-call-number generation information creation unit 21. For reference, timestamp addition unit 22 adds timestamps at arbitrarily determined time intervals.

Excess-call-number generation information storage unit 23 stores the excess-call-number generation information created by excess-call-number generation information creation unit 21 with timestamps added by timestamp addition unit 22.

Excess-call-number generation information transmission unit 24 transmits to radio base station controller 1 the timestamped excess-call-number generation information stored in excess-call-number generation information storage unit 23.

Radio base station controller 1 is provided with state monitor unit 11, timestamp addition unit 12, state information storage unit 13, neighboring base station information storage unit 14, excess-call-number generation information reception unit 15 and overload state decision unit 16.

State monitor unit 11 monitors the states of all base station radio units 2A to 2Z connected to radio base station controller 1 (monitors whether or not the respective base station radio units are in the normal state, in the alarm states, in the states of operational halt on account of being out-of-order, or the like.)

Timestamp addition unit 12 adds the timestamps to the state information (information that indicates the state of the base station radio unit), representing the monitored results, made in state monitor unit 11, for the states of base station radio units 2A to 2Z.

State information storage unit 13 stores the state information of a base station radio unit monitored by state monitor unit 11 with the timestamps added by timestamp addition unit 12 for every base station radio unit 2A to 2Z.

Neighboring base station information storage unit 14 stores the neighboring base station information representing the base station radio unit in the neighborhood of the relevant base station radio unit for every base station radio unit 2A to 2Z.

Excess-call-number generation information reception unit 15 receives the excess-call-number generation information with added timestamps, transmitted from each of base station radio units 2A to 2Z.

Overload state decision unit 16 decides that a call is generated in excess of the call processing capability in any of base station radio units 2A to 2Z causing an overloaded state, based on the excess-call-number generation information received by excess-call-number generation information reception unit 15.

Overload state decision unit 16 further makes the following decision: if overload state decision unit 16 decides that any of base station radio units 2A to 2Z has become overloaded, then overload state decision unit 16 decides whether the cause of the overload state is due to the hardware and software architectures of the relevant base station radio unit, or to the state of the neighboring base station radio unit, based on the state information stored in state information storage unit 13 and the neighboring base station information stored in neighboring base station information storage unit 14.

More specifically, when any of base station units 2A to 2Z reaches an overload state, overload state decision unit 16 makes a decision that the cause of the overload state is due to the hardware and software architectures of the base station radio unit if all the base station radio units in the neighborhood of the relevant base station radio units are in a normal state at that time.

In contrast to the above case, even in the case that any of base station radio units 2A to 2Z are brought into an overload state, overload state decision unit 16 makes a decision that the cause of the overload state is due to the state of a neighboring base station radio unit, if the base station radio unit in the neighborhood of the relevant base station radio unit is in an abnormal state (the state of alarm, state of operational halt or the like) at that time.

Explanation is presented below regarding the operation of the mobile telecommunication system shown in Fig. 1. In this embodiment, it is assumed that trouble that occurs in base station radio unit 2G in the neighborhood of base station radio unit 2M has caused the state of operational halt.

Referring to Fig. 3, the neighboring base station radio units in the neighborhood of base station radio unit 2G are base station radio unit 2B, 2C, 2F, 2H, 2L and 2M, each of which covers the coverage area of base station radio unit 2G. In Fig. 3, area m is an area covered by base station radio unit 2M when base station radio unit 2G experiences trouble. Likewise, areas b, c, f, h and I are the areas covered by base station radio units 2B, 2C, 2F, 2H and 2L, respectively, when base station radio unit 2G experiences trouble.

As is clear from Fig. 3, when base station radio unit 2G experiences trouble, the area to be covered by base station radio unit 2M becomes larger (M+m) than the normally covered area (M), resulting in a corresponding increase in the number of mobile radio stations to be accommodated. For this reason, in base station radio unit 2M, the probability of generating a call in excess of the call processing capability increases. Moreover, it is a matter of course that, if base station radio units 2G and 2H experiences trouble at the same time, the area to be covered by base station radio unit 2M further increases resulting in an increase in the probability of generating calls in excess of the call processing capability of base station radio unit 2M.

The call processing capability of base station radio unit 2M depends on the hardware and software architectures installed in base station radio unit 2M as described above. For this reason, when a call is generated in excess of the call processing capability in base station radio unit 2M causing an overload state, base station radio unit 2M must check the states of the base station radio units in the neighborhood of base station radio unit 2M and decide whether the cause of the overload state is due to the state of any of the neighboring base station radio units, or to the hardware and software architectures of base station radio unit 2M, in order to decide whether it is necessary to install the additional hardware and/or to revise the software of base station radio unit 2M.

As described above, when a call is generated in excess of the call processing capability of base station radio unit 2M, unit 2M does not process the call. In this occasion, excess-call-number generation information creation unit 21 creates the excess-call-number generation information representing the number of calls that have been excluded from processing, timestamp addition unit 22 adds timestamps to the excess-call-number generation information, and excess-call-number generation information storage unit 23 stores the timestamped excess-call-number generation information. Further, excess-call-number generation information transmission unit 24 transmits the timestamped excess-call-number generation information stored in excess-call-number generation information storage unit 23 to radio base station controller 1.

Further, in radio base station controller 1, when excess-call-number generation information reception unit 15 receives the timestamped excess-call-number generation information sent from base station radio unit 2M, overload state decision unit 16 decides that a call has been generated in excess of the call processing capability in base station radio unit 2M causing the unit 2M to become overloaded.

In this regard, overload state decision unit 16 does not immediately decide that the cause responsible for the overload state in base station radio unit 2M resides in the existing hardware and software architectures of base station radio unit 2M, but always checks the states of the base station radio units in the neighborhood of base station radio unit 2M, on the basis of the state information stored in state information storage unit 13 and the neighboring base station information stored in neighboring base station information storage unit 14.

The example shown in Fig. 3 illustrates the case in which base station radio unit 2G in the neighborhood of base station radio unit 2M experiences trouble. Thus, overload state decision unit 16 decides that the cause of the overload state in base station radio unit 2M does not reside in the existing hardware and software architecture of base station radio unit 2M. Conversely, if all the base station radio units in the neighborhood of base station radio unit 2M are in a normal state, overload state decision unit 16 decides that the existing hardware and software architectures of base station radio unit 2M are not structured to be able to process calls that need to be handled.

While preferred embodiments of the present invention have been described using specific terms, such description is for illustrative purpose only, and it is to be understood that changes and variations may be made without departing from the scope of the following claims.

## Claims

1. A mobile telecommunication system comprising:
a radio base station controller; and
a plurality of base station radio units (2A,2B,2Z) each connected to said radio base station controller and, if a call is generated in excess of the call processing capability of the relevant base station radio unit, that unit is not adapted to process the call;
wherein each of said base station radio units include :
an excess-call-number generation information creation unit (21) adapted to create excess-call-number generation information representing the number of the calls that have been excluded from processing when calls are generated in the relevant base station radio unit in excess of its call processing capability;
a first timestamp addition unit (22) adapted to add timestamps to said excess-call-number generation information created in said excess-call-number generation information creation unit; and
an excess-call-number generation information transmission unit (24) adapted to transmit to said radio base station controller the excess-call-number generation information created in said excess-call-number generation information creation unit with timestamps added in said first timestamp addition unit;
and said radio base station controller including:
a state monitor unit (11) adapted to monitor the state of each of said plurality of base station radio units;
a second timestamp addition unit (12) adapted to add timestamps to state information representing the results of monitoring the states of said base station radio units, monitored in said state monitor unit;
a state information storage unit (13) adapted to store the state information of said base station radio unit monitored in said state monitor unit with the timestamps added in said second timestamp addition unit for each of said plurality of base station radio units;
a neighboring base station information storage unit (14) adapted to store neighboring base station information representing the base station radio unit in the neighborhood of the relevant base station radio unit for each of said plurality of base station radio units;
an excess-call-number generation information reception unit (15) adapted to receive the excess-call-number generation information with the timestamps transmitted from each of said plurality of base station radio units; and
an overload state decision unit (16) adapted to decide that a call is generated in any of said plurality of base station radio units in excess of the call processing capability of the relevant base station radio unit to cause an overload state, on the basis of the excess-call-number generation information received by the excess-call-number generation information reception unit and, if it is decided that the overload state has been caused, adapted to decide then whether the cause of the overload state in said base station radio unit is due to the architecture of the relevant base station radio unit, or to the state of a base station radio unit in the neighborhood of the relevant base station radio unit, based on the state information stored in said state information storage unit and said neighboring base station information stored in said neighboring base station information storage unit.

2. Mobile telecommunication system according to claim 1, wherein, at the time that any of said plurality of base station radio units becomes overloaded, said overload state decision unit is adapted to decide, if all of the base station radio units in the neighborhood of the relevant base station radio unit are in a normal state, that the cause of the overload state of said base station radio unit is due to the architecture of the relevant base station radio unit.

3. A method of monitoring an overload state of a base station radio unit in a mobile telecommunication system having a radio base station controller and a plurality of base station radio units (2A,2B,2Z) each connected to said radio base station controller and, if a call is generated in excess of the call processing capability of the relevant base station radio unit, not adapted to process the call, comprising steps of:
operating said radio base station controller to monitor the state of each of said plurality of base station radio units and store state information representing the result of monitoring the state of the relevant base station radio unit with timestamps being added for each of said plurality of base station radio units in a state information storage unit,
operating said radio base station controller to store neighboring base station information representing the base station radio unit in the neighborhood of the relevant base station radio unit for each of said plurality of base station radio units in a neighboring base station information storage unit,
operating each of said plurality of base station radio units when a call is generated in the relevant base station radio unit in excess of the call processing capability of the relevant base station radio unit, to create excess-call-number generation information representing the number of calls excluded from processing and to transmit the created excess-call-number generation information with timestamps being added to said radio base station controller,
operating said radio base station controller to decide that a call is generated in any of said plurality of base station radio units in excess of the call processing capability of the relevant base station radio unit to cause an overload state, on the basis of the excess-call-number generation information received from each of said plurality of base station radio units, and
operating said radio base station controller, when it is decided that an overload state is caused in any of said plurality of base station radio units, to decide whether the cause of the overload state of the relevant base station radio unit is due to the architecture of the relevant base station radio unit, or to the states of the base station radio units in the neighborhood of the relevant base station radio unit, on the basis of the state information stored in said state information storage unit and the neighboring base station information stored in the neighboring base station information storage unit.

4. Method of monitoring an overload state according to claim 3, wherein, in said step of deciding the cause of the overload state of the relevant base station radio unit, it is decided that the cause of the overload state of said base station radio unit is due to the architecture of the relevant base station radio unit, if all of the base station radio units in the neighborhood of the relevant base station radio unit are in a normal state at the time that the relevant base station radio unit becomes overloaded.

## Patentansprüche

1. Mobiles Telekommunikationssystem, umfassend:
eine Funkbasisstationssteuerung; und
eine Mehrzahl Basisstationsfunkeinheiten (2A, 2B, 2Z), wobei jede mit der Funkbasisstationssteuerung verbunden ist und, wenn ein Anruf erzeugt wird, der über das Anrufverarbeitungsvermögen der relevanten Basisstationsfunkeinheit hinausgeht, die Einheit nicht eingerichtet ist, um den Anruf zu verarbeiten;
wobei jede der Basisstationsfunkeinheiten umfasst:
eine Überschussanrufanzahl-Erzeugungsinformationserstelleinheit (21), die eingerichtet ist, um Überschussanrufanzahl-Erzeugungsinformationen zu erstellen, die die Anzahl der Anrufe wiedergeben, die von der Verarbeitung ausgeschlossen wurden, wenn Anrufe in der relevanten Basisstationsfunkeinheit erzeugt werden, die über ihr Verarbeitungsvermögen hinausgehen;
eine erste Zeitstempelzufügeinheit (22), die eingerichtet ist, um Zeitstempel zu den Überschussanrufanzahl-Erzeugungsinformationen hinzuzufügen, die in der Überschussanrufanzahl-Erzeugungsinformationserstelleinheit erstellt werden; und
eine Überschussanrufanzahl-Erzeugungsinformationssendeeinheit (24), die eingerichtet ist, um die Überschussanrufanzahl-Erzeugungsinformationen, die in der Überschussanrufanzahl-Erzeugungsinformationserstelleinheit erstellt wurden, an die Funkbasisstationssteuerung zu senden, wobei in der ersten Zeitstempelzufügungseinheit Zeitstempel hinzugefügt werden;
und wobei die Funkbasisstationssteuerung umfasst:
eine Zustandsüberwachungseinheit (11), die eingerichtet ist, um den Zustand der Mehrzahl Basisstationsfunkeinheiten zu überwachen;
eine zweite Zeitstempelzutügeinheit (12), die eingerichtet ist, um Zeitstempel zu Zustandsinformationen hinzuzufügen, die die Ergebnisse des Überwachens der Zustände der Basisstationsfunkeinheiten wiedergeben, die in der Zustandsüberwachungseinheit überwacht werden;
eine Zustandsinformationsspeichereinheit (13), die eingerichtet ist, um die Zustandsinformationen der Basisstationsfunkeinheit, die in der Zustandsüberwachungseinheit überwacht wird, mit den in der zweiten Zeitstempelzufügeinheit für jede der Mehrzahl Basisstationsfunkeinheiten hinzugefügten Zeitstempeln zu speichern;
eine benachbarte Basisstationsinformationsspeichereinheit (14), die eingerichtet ist, um Nachbarbasisstationsinformationen zu speichern, die die Basisstationsfunkeinheit in der Nachbarschaft der relevanten Basisstationsfunkeinheit für jede der Mehrzahl Basisstationsfunkeinheiten wiedergeben;
eine Überschussanrufanzahl-Erzeugungsinformationsempfangseinheit (15), die eingerichtet ist, um die Überschussanrufanzahl-Erzeugungsinformationen mit den von jeder der Mehrzahl Basisstationsfunkeinheiten gesendeten Zeitstempeln zu empfangen; und
eine Überlastungszustandentscheidungseinheit (16), die eingerichtet ist, um basierend auf den Überschussanrufanzahl-Erzeugungsinformationen, die von der Überschussanrufanzahl-Erzeugungsinformationsempfangseinheit empfangen werden, zu entscheiden, dass ein in jeglicher der Mehrzahl Basisstationsfunkeinheiten erzeugter Anruf über das Anrufverarbeitungsvermögen der relevanten Basisstationsfunkeinheit hinausgeht und einen Überlastungszustand erzeugt, und, wenn entschieden wird, dass der Überlastungszustand erzeugt worden ist, eingerichtet ist, um dann basierend auf den Zustandsinformationen, die in der Zustandsinformationsspeichereinheit gespeichert sind, und den Nachbarbasisstationsinformationen, die in der benachbarten Basisstationsinformationsspeichereinheit gespeichert sind, zu entscheiden, ob der Grund des Überlastungszustands in der Basisstationsfunkeinheit die Architektur der relevanten Basisstationsfunkeinheit oder der Zustand einer Basisstationsfunkeinheit in der Nachbarschaft der relevanten Basisstationsfunkeinheit ist.

2. Mobiles Telekommunikationssystem nach Anspruch 1, wobei die Überlastungszustandsentscheidungseinheit eingerichtet ist, um zu der Zeit, wenn jegliche der Mehrzahl Basisstationsfunkeinheiten überlastet werden, zu entscheiden, dass der Grund des Überlastungszustands der Basisstationsfunkeinheit die Architektur der relevanten Basisstationsfunkeinheit ist, wenn sich alle Basisstationsfunkeinheiten in der Nachbarschaft der relevanten Basisstationsfunkeinheit im normalen Zustand befinden.

3. Verfahren zum Überwachen eines Überlastungszustands einer Basisstationsfunkeinheit in einem mobilen Telekommunikationssystem mit einer Funkbasisstationssteuerung und einer Mehrzahl Basisstationsfunkeinheiten (2A, 2B, 2Z), wobei jede mit der Funkbasisstationssteuerung verbunden ist und, wenn ein Anruf erzeugt wird, der über das Anrufverarbeitungsvermögen der relevanten Basisstationsfunkeinheit hinausgeht, nicht eingerichtet ist, um den Anruf zu verarbeiten; umfassend folgende Schritte:
Betreiben der Funkbasisstationssteuerung, um den Zustand jeder der Mehrzahl Basisstationsfunkeinheiten zu überwachen und Zustandsinformationen zu speichern, die das Ergebnis des Überwachens des Zustands der relevanten Basisstationsfunkeinheit wiedergeben, wobei für jede der Mehrzahl Basisstationsfunkeinheiten in einer Zustandsinformationsspeichereinheit Zeitstempel hinzugefügt werden,
Betreiben der Funkbasisstationssteuerung, um Nachbarbasisstationsinformationen, die die Basisstationsfunkeinheit in der Nachbarschaft der relevanten Basisstationsfunkeinheit für jede der Mehrzahl Basisstationsfunkeinheiten wiedergeben, in einer Nachbarbasisstationsinformationsspeichereinheit zu speichern;
Betreiben jeder der Mehrzahl Basisstationsfunkeinheiten, wenn ein Anruf in der relevanten Basisstationsfunkeinheit erzeugt wird, der über das Verarbeitungsvermögen der relevanten Basisstationsfunkeinheit hinausgeht, um Überschussanrufanzahl-Erzeugungsinformationen zu erstellen, die die Anzahl der Anrufe wiedergeben, die von der Verarbeitung ausgeschlossen wurden, und die erstellten Überschussanrufanzahl-Erzeugungsinformationen an die Funkbasisstationssteuerung zu senden, wobei Zeitstempel hinzugefügt werden,
Betreiben der Funkbasisstationssteuerung, um auf Basis der von jeder der Mehrzahl Basisstationsfunkeinheiten empfangenen Überschussanrufanzahl-Erzeugungsinformationen zu entscheiden, dass ein in jeglicher der Mehrzahl Basisstationsfunkeinheiten erzeugter Anruf über das Anrufverarbeitungsvermögen der relevanten Basisstationsfunkeinheit hinausgeht und einen Überlastungszustand erzeugt, und
Betreiben der Funkbasisstationssteuerung, wenn entschieden wird, dass in jeglicher der Mehrzahl Basisstationsfunkeinheiten ein Überlastungszustand erzeugt wird, um auf Basis der Zustandsinformationen, die in der Zustandsinformationsspeichereinheit gespeichert sind, und der Nachbarbasisstationsinformationen, die in der benachbarten Basisstationsinformationsspeichereinheit gespeichert sind, zu entscheiden, ob der Grund des Überlastungszustands in der Basisstationsfunkeinheit die Architektur der relevanten Basisstationsfunkeinheit oder die Zustände der Basisstationsfunkeinheiten in der Nachbarschaft der relevanten Basisstationsfunkeinheit sind.

4. Verfahren zum Überwachen eines Überlastungszustands nach Anspruch 3, wobei im Schritt des Entscheidens des Grunds des Überlastungszustands der relevanten Basisstationsfunkeinheit entschieden wird, dass der Grund des Überlastungszustands der Basisstationsfunkeinheit die Architektur der relevanten Basisstationsfunkeinheit ist, wenn sich alle Basisstationsfunkeinheiten in der Nachbarschaft der relevanten Basisstationsfunkeinheit zu der Zeit, wenn die relevante Basisstationsfunkeinheit überlastet wird, im normalen Zustand befinden.

## Revendications

1. Système de télécommunication mobile comprenant :
un contrôleur de station de base radio ; et
une pluralité d'unités radio de stations de base (2A, 2B, 2Z) chacune connectée audit contrôleur de station de base radio et, si un appel est généré en dépassement de la capacité de traitement d'appels de l'unité radio de station de base pertinente, cette unité n'est pas apte à traiter l'appel ;
dans lequel chacune desdites unités radio de stations de base comprend :
une unité de création d'informations de génération de numéro d'appel en dépassement (21) apte à créer des informations de génération de numéro d'appel en dépassement représentant le nombre d'appels qui ont été exclus du traitement lorsque des appels sont générés dans l'unité radio de station de base pertinente en dépassement de sa capacité de traitement d'appels ;
une première unité d'ajout d'horodatages (22) apte à ajouter des horodatages aux dites informations de génération de numéro d'appel en dépassement dans ladite unité de création d'informations de génération de numéro d'appel en dépassement ; et
une unité de transmission d'informations de génération d'appel en dépassement (24) apte à transmettre audit contrôleur de station de base radio les informations de génération de numéro d'appel en dépassement créées dans ladite unité de création d'informations de génération de numéro d'appel en dépassement avec des horodatages ajoutés dans ladite première unité d'ajout d'horodatages ;
et ledit contrôleur de station de base radio comprenant :
une unité de surveillance d'état (11) apte à surveiller l'état de chacune de ladite pluralité d'unités radio de stations de base ;
une deuxième unité d'ajout d'horodatages (12) apte à ajouter des horodatages aux informations d'état représentant les résultats de la surveillance des états desdites unités radio de stations de base, surveillées dans ladite unité de surveillance d'état ;
une unité de mémorisation d'informations d'état (13) apte à mémoriser les informations d'état de ladite unité radio de station de base surveillée dans ladite unité de surveillance d'état avec les horodatages ajoutés dans ladite deuxième unité d'ajout d'horodatages pour chacune de ladite pluralité d'unités radio de stations de base ;
une unité de mémorisation d'informations de stations de base voisines (14) apte à mémoriser des informations de stations de base voisines représentant l'unité radio de station de base dans le voisinage de l'unité radio de station de base pertinente pour chacune de ladite pluralité d'unités radio de stations de base ;
une unité de réception d'informations de génération de numéro d'appel en dépassement (15) apte à recevoir les informations de génération de numéro d'appel en dépassement avec les horodatages transmis de chacune de ladite pluralité d'unités radio de stations de base ; et
une unité de décision d'état de surcharge (16) apte à décider qu'un appel est généré dans l'une de ladite pluralité d'unités radio de stations de base en dépassement de la capacité de traitement d'appels de l'unité radio de station de base pertinente pour provoquer un état de surcharge, sur la base des informations de génération de numéro d'appel en dépassement reçues par l'unité de réception d'informations de génération de numéro d'appel en dépassement et, s'il est décidé que l'état de surcharge a été provoqué, apte à décider alors si la cause de l'état de surcharge dans ladite unité radio de station de base est due à l'architecture de l'unité radio de station de base pertinente ou à l'état d'une unité radio de station de base dans le voisinage de l'unité radio de station de base pertinente, sur la base des informations d'état mémorisées dans ladite unité de mémorisation d'informations d'état et desdites informations de stations de base voisines mémorisées dans ladite unité de mémorisation d'informations de stations de base voisines.

2. Système de télécommunication mobile selon la revendication 1, dans lequel, au moment où l'une de ladite pluralité d'unités radio de stations de base devient surchargée, ladite unité de décision d'état de surcharge est apte à décider, si toutes les unités radio de stations de base dans le voisinage de l'unité radio de station de base pertinente sont dans un état normal, que la cause de l'état de surcharge de ladite unité radio de station de base est due à l'architecture de l'unité radio de station de base pertinente.

3. Procédé de surveillance d'un état de surcharge d'une unité radio de station de base dans un système de télécommunication mobile ayant un contrôleur de station de base radio et une pluralité d'unités radio de stations de base (2A, 2B, 2Z) chacune connectée audit contrôleur de station de base radio et, si un appel est généré en dépassement de la capacité de traitement d'appels de l'unité radio de station de base pertinente, cette unité n'est pas apte à traiter l'appel, comprenant les étapes consistant à :
utiliser ledit contrôleur de station de base radio pour surveiller l'état de chacune de ladite pluralité d'unités radio de stations de base et mémoriser les informations d'état représentant le résultat de la surveillance de l'état de l'unité radio de station de base pertinente avec des horodatages ajoutés pour chacune de ladite pluralité d'unités radio de stations de base dans une unité de mémorisation d'informations d'état,
utiliser ledit contrôleur de station de base radio pour mémoriser des informations de stations de base voisines représentant l'unité radio de station de base dans le voisinage de l'unité radio de station de base pertinente pour chacune de ladite pluralité d'unités radio de stations de base dans une unité de mémorisation d'informations de stations de base voisines,
utiliser chacune de ladite pluralité d'unités radio de stations de base lorsqu'un appel est généré dans l'unité radio de station de base pertinente en dépassement de la capacité de traitement d'appels de l'unité radio de station de base pertinente, pour créer des informations de génération de numéro d'appel en dépassement représentant le nombre d'appels exclus du traitement et pour transmettre les informations de génération de numéro d'appel en dépassement créées avec des horodatages ajoutés audit contrôleur de station de base radio,
utiliser ledit contrôleur de station de base radio pour décider qu'un appel est généré dans l'une de ladite pluralité d'unités radio de stations de base en dépassement de la capacité de traitement d'appels de l'unité radio de station de base pertinente pour provoquer un état de surcharge, sur la base des informations de génération de numéro d'appel en dépassement reçues de chacune de ladite pluralité d'unités radio de stations de base, et
utiliser ledit contrôleur de station de base radio, lorsqu'il est décidé qu'un état de surcharge est provoqué dans l'une de ladite pluralité d'unités radio de stations de base, pour décider si la cause de l'état de surcharge de ladite unité radio de station de base pertinente est due à l'architecture de l'unité radio de station de base pertinente ou aux états des unités radio de stations de base dans le voisinage de l'unité radio de station de base pertinente, sur la base des informations d'état mémorisées dans ladite unité de mémorisation d'informations d'état et desdites informations de stations de base voisines mémorisées dans l'unité de mémorisation d'informations de stations de base voisines.

4. Procédé de surveillance d'un état de surcharge selon la revendication 3, dans lequel, à ladite étape consistant à décider la cause de l'état de surcharge de l'unité radio de station de base pertinente, il est décidé si la cause de l'état de surcharge de ladite unité radio de station de base est due à l'architecture de l'unité radio de station de base pertinente, si toutes les unités radio de stations de base dans le voisinage de l'unité radio de station de base pertinente sont dans un état normal au moment où l'unité radio de station de base pertinente devient surchargée.
